# EUROPÄISCHE PATENTANMELDUNG

(11) **EP 3 121 095 A1**
(43) Veröffentlichungstag der Anmeldung: **25.01.2017**
(21) Anmeldenummer: 16173639.2
(22) Anmeldetag: 09.06.2016
(51) Int. Cl.: B62D 15/02, B60T 7/22, B60R 1/00, G01C 21/00, G06K 9/00

(54) **VERFAHREN UND VORRICHTUNG ZUR FAHRERASSISTENZ**

(30) Priorität: 14.07.2015 DE 102015213172
(71) Anmelder: ROBERT BOSCH GMBH, 70442 Stuttgart (DE)
(72) Erfinder: Mimura, Keiji, 71640 Ludwigsburg (DE); Schuetz, Markus, 73110 Hattenhofen (DE); Nienhueser, Dennis, 76137 Karlsruhe (DE); Knoop, Steffen, 76228 Hohenwettersbach (DE)

(57) **Zusammenfassung**

Die Erfindung betrifft ein Verfahren zur Fahrerassistenz, bei dem ein Fahrer eines Fahrzeugs (1) bei einem Fahrmanöver unterstützt wird. In einem ersten Schritt wird ein Vorzugsbereich (28) durch Auswählen eines Bereichs des Fahrzeugs (1) oder einer Tür des Fahrzeugs (1) bestimmt. Anschließend wird eine optimale Fahrzeugposition und optimale Fahrzeugausrichtung auf einem Parkplatz (20) ermittelt, bei der der Vorzugsbereich (28) frei von den Parkplatz (20) begrenzenden Objekten (22) ist und das Fahrzeug (1) wir zur optimalen Fahrzeugausrichtung geführt.

Weitere Aspekte der Erfindung betreffen ein Computerprogramm, ein Mobilgerät und ein Fahrerassistenzsystem, welche zur Durchführung des Verfahrens eingerichtet sind.

## Beschreibung

### Stand der Technik

Die Erfindung betrifft ein Verfahren zur Fahrerassistenz, bei dem ein Fahrer eines Fahrzeugs bei einem Fahrmanöver unterstützt wird. Weitere Aspekte der Erfindung betreffen ein Mobilgerät, welches zur Kommunikation mit einem Fahrzeug eingerichtet ist und im Zusammenhang mit dem Verfahren zur Fahrerassistenz verwendbar ist. Des Weiteren betrifft die Erfindung ein Computerprogramm sowie ein Fahrerassistenzsystem, welche zur Durchführung des Verfahrens eingerichtet sind.

Moderne Fahrzeuge sind mit Fahrerassistenzsystemen ausgestattet, um den Fahrer eines Fahrzeugs bei der Durchführung verschiedener Fahrmanöver zu unterstützen. Dabei sind insbesondere Einparkassistenzsysteme bekannt, die mit Hilfe von Sensoren Parklücken erfassen, eine Zielposition in der Parklücke ermitteln und das Fahrzeug zur Zielposition führen.

Aus DE 10 2011 077173 A1 ist eine Fahrerassistenzvorrichtung zur Unterstützung eines Einparkvorgangs eines Fahrzeugs in eine Querparklücke bekannt. Die Fahrerassistenzvorrichtung umfasst eine Erfassungseinheit zur Erfassung von Daten einer Umgebung des Fahrzeugs sowie eine Einheit zur Bestimmung einer Einparktrajektorie, mit der das Fahrzeug zu einer Zielposition in der Querparklücke geführt werden kann. Dabei ist vorgesehen, dass bei der Ermittlung der Zielparkposition ein definierter Sicherheitsabstand zum Öffnen der Fahrertür berücksichtigt wird. Dazu wird, falls keine begrenzenden Objekte, wie beispielsweise andere geparkte Fahrzeuge oder Wände vorhanden sind, die Zielparkposition bevorzugt in der Mitte der Querparklücke platziert. Sind begrenzende Objekte vorhanden, so wird die Zielparkposition derart definiert, dass dem Fahrer zum Öffnen seiner Fahrertür ausreichend Raum zur Verfügung steht. Dazu wird insbesondere das Fahrzeug nicht mittig in der begrenzten Querparklücke geparkt, sondern die Zielparkposition kann zu der Mitte seitlich versetzt sein.

Nachteilig am Stand der Technik ist, dass ein erhöhter Platzbedarf beim Einsteigen und Aussteigen aus dem Fahrzeug von weiteren Fahrzeuginsassen nicht berücksichtigt wird.

### Offenbarung der Erfindung

Es wird ein Verfahren zur Fahrerassistenz vorgeschlagen, bei dem ein Fahrer eines Fahrzeugs bei einem Fahrmanöver unterstützt wird. In einem ersten Schritt des Verfahrens wird ein an das Fahrzeug angrenzender Vorzugsbereich durch Auswählen eines Bereichs oder einer Tür des Fahrzeugs bestimmt. In einem zweiten Schritt werden eine optimale Fahrzeugposition und eine optimale Fahrzeugausrichtung auf einem Parkplatz ermittelt, bei der der Vorzugsbereich frei von den Parkplatz begrenzenden Objekten ist. Anschließend wird das Fahrzeug zur optimalen Fahrzeugposition mit optimaler Fahrzeugausrichtung geführt.

Parkplätze, insbesondere Querparkplätze, bei denen das Fahrzeug quer zu einer Fahrbahn eingeparkt wird, werden in der Regel an einer oder an beiden Seiten von Objekten begrenzt. Ein solches den Parkplatz begrenzendes Objekt kann beispielsweise ein parkendes Fahrzeug, eine Mauer, eine Säule oder eine Hecke sein. Befindet sich das Fahrzeug auf dem Parkplatz beziehungsweise in der Querparklücke, steht für einen Zugang zum Fahrzeug, insbesondere für einen Zugang zu den Türen des Fahrzeugs, nur ein begrenzter Raum zur Verfügung. Mit Hilfe des erfindungsgemäßen Verfahrens wird das Ziel verfolgt, in Bezug zu einer Tür beziehungsweise einem an das Fahrzeug angrenzenden Bereich, die einen Vorzugsbereich ausbilden, das Fahrzeug auf dem Parkplatz so zu positionieren, dass der definierte Bereich beziehungsweise der für das Öffnen der Tür benötigte Bereich frei von den Parkplatz begrenzenden Objekten ist. Somit ist der Vorzugsbereich frei von den Parkplatz begrenzenden Objekten und in der Folge wird ein Zugang zu dem Fahrzeug beziehungsweise zu der Tür nicht durch die begrenzenden Objekte eingeschränkt.

Unter dem Begriff Fahrzeugposition wird die Position des Fahrzeugs mit Bezug auf einen Referenzpunkt verstanden, der sich beispielsweise im geometrischen Mittelpunkt des Fahrzeugs befindet oder beispielsweise in der Mitte der Hinterachse des Fahrzeugs angeordnet ist. Unter der Fahrzeugausrichtung wird der Winkel verstanden, der zwischen der Längsachse des Fahrzeugs und der Längsachse des Parkplatzes beziehungsweise der Querparklücke eingeschlossen ist.

Dabei bezeichnet ein Winkel von etwa 0°, dass das Fahrzeug vorwärts in die Querparklücke eingeparkt ist und ein Winkel von etwa 180°, dass das Fahrzeug rückwärts in die Querparklücke eingeparkt ist. Zum Freihalten des Vorzugsbereichs kann das Fahrzeug schräg auf dem Parkplatz positioniert werden. Um das Fahrzeug schräg zu positionieren, liegt der Winkel zwischen der Fahrzeuglängsachse und der Längsachse des Parkplatzes bevorzugt im Bereich von 1° bis 10° beziehungsweise 350° bis 359°, wenn das Fahrzeug im Wesentlichen vorwärts auf den Parkplatz eingefahren ist und bei einem Rückwärtseinparken im Bereich von 170° bis 179° oder 181° bis 190°.

Wird für den Vorzugsbereich eine Tür des Fahrzeugs ausgewählt, wird unter dem Vorzugsbereich der für das Aufschwingen dieser Tür erforderliche Bereich beziehungsweise Raum verstanden.

Da die Fahrzeugtüren bei einem typischen Personenkraftwagen (PKW) in der Regel nach außen aufschwingen, ist es zur Optimierung der Fahrzeugposition und Fahrzeugausrichtung in der Regel vorteilhaft, die Längsachse des Fahrzeugs nicht parallel zu der Längsachse des Parkplatzes auszurichten, sondern das Fahrzeug schräg auf dem Parkplatz zu positionieren. Zur Bestimmung der optimalen Fahrzeugausrichtung wird bevorzugt ein Optimierungsproblem gelöst, wobei die Schrägstellung des Fahrzeugs minimiert wird unter der Randbedingung, dass der Vorzugsbereich frei von den Parkplatz begrenzenden Objekten ist.

Um die optimale Position und die optimale Fahrzeugausrichtung auf dem Parkplatz ermitteln zu können, werden dem Fahrzeug Sensoren zugeordnet, über die die Umgebung erfasst werden kann. Dabei sind die Sensoren insbesondere in der Lage, Hindernisse, die beispielsweise eine Parklücke begrenzen, zu erkennen. Mit Hilfe der über die Sensoren gewonnenen Daten über das Umfeld des Fahrzeugs werden Objekte erkannt, die den Parkplatz beziehungsweise die Parklücke, insbesondere eine Querparklücke, begrenzen, und es können die geometrischen Abmessungen, insbesondere Länge und Breite des Parkplatzes bestimmt werden. Auch die Längsachse des Parkplatzes kann über dem Fahrzeug zugeordnete Sensoren bestimmt werden. Hierzu können beispielsweise die Positionen und Ausrichtungen von den Parkplatz begrenzenden Objekten ausgewertet werden, Markierungen des Parkplatzes erkannt werden und/oder der Verlauf einer an den Parkplatz angrenzenden Fahrbahn herangezogen werden. Da die geometrischen Abmessungen sowie die Längsachse des eigenen Fahrzeugs bekannt sind, können im Anschluss eine optimale Fahrzeugposition und eine optimale Fahrzeugausrichtung bestimmt werden, mit denen das Fahrzeug so auf dem Parkplatz platziert werden kann, dass der Vorzugsbereich frei von den Parkplatz begrenzenden Objekten ist.

Die optimale Fahrzeugposition und die optimale Fahrzeugausrichtung werden bevorzugt so gewählt, dass der Abstand zwischen dem Vorzugsbereich des Fahrzeugs und dem nächstgelegenen begrenzenden Objekt maximal wird. In jedem Fall erfolgt die Wahl der optimalen Fahrzeugposition und optimalen Fahrzeugausrichtung so, dass der Vorzugsbereich frei von den Parkplatz begrenzenden Objekten ist.

Des Weiteren ist es bevorzugt, wenn bei dem Ermitteln der optimalen Fahrzeugposition und der optimalen Fahrzeugausrichtung ein Sicherheitsabstand zu den Parkplatz begrenzenden Objekten berücksichtigt wird, so dass der kleinste Abstand des Fahrzeugs zu einem den Parkplatz begrenzenden Objekts den Sicherheitsabstand nicht unterschreitet.

Die dem Fahrzeug zugeordneten Sensoren sind beispielsweise als Ultraschallsensoren, Radarsensoren, Lidarsensoren, Videokameras, Stereokameras oder einer Kombination mindestens zweier dieser Sensoren ausgeführt.

In einer Ausführungsform des Verfahrens werden über dem Fahrzeug zugeordnete Sensoren Parkplätze in der Umgebung des Fahrzeugs erkannt und anschließend ein Parkplatz ausgewählt, wobei das Fahrzeug zu einer optimalen Fahrzeugposition mit einer optimalen Fahrzeugausrichtung auf dem ausgewählten Parkplatz geführt wird.

In dieser Ausführungsform des Verfahrens erfolgt das Bestimmen des Vorzugsbereichs bereits vor dem Einparken des Fahrzeugs, so dass die optimale Fahrzeugposition mit der optimalen Fahrzeugausrichtung bereits während des Einparkvorgangs berücksichtigt werden kann.

In einer weiteren Ausführungsform des Verfahrens ist das Fahrzeug bereits auf dem Parkplatz abgestellt und das Fahrzeug wird zu der optimalen Fahrzeugposition mit der optimalen Fahrzeugausrichtung innerhalb des Parkplatzes geführt. Bei dieser Ausführungsform des Verfahrens erfolgt das Bestimmen des Vorzugsbereichs erst nach Abschluss eines Parkvorgangs, wobei das Fahrzeug zunächst nicht optimal auf dem Parkplatz steht. Nach dem Bestimmen des Vorzugsbereichs wird die Position des Fahrzeugs und dessen Ausrichtung korrigiert, so dass beide nach Abschluss des Verfahrens optimal sind.

Bevorzugt erfolgt das Führen des Fahrzeugs zur optimalen Fahrzeugposition mit optimaler Fahrzeugausrichtung automatisch oder semi-automatisch.

Unter einer automatischen Führung des Fahrzeugs wird verstanden, dass das Fahrerassistenzsystem sowohl die Längsführung, also das Beschleunigen und Abbremsen des Fahrzeugs, als auch die Querführung, also die Lenkung des Fahrzeugs übernimmt. Dem Fahrer des Fahrzeugs obliegt während der Führung lediglich eine Überwachungsfunktion. Bei einer semi-automatischen Führung des Fahrzeugs wird lediglich die Längsführung übernommen, wobei dem Fahrer die Querführung obliegt, oder umgekehrt wird durch das Verfahren die Querführung übernommen, wobei dem Fahrer die Längsführung obliegt.

Das Bestimmen des Vorzugsbereichs erfolgt bei dem Verfahren bevorzugt über eine Mensch-Maschine-Schnittstelle, über die Informationen ausgegeben werden können und Eingaben des Fahrers entgegengenommen werden können. Die Mensch-Maschine-Schnittstelle ist beispielsweise als Touchscreen ausgeführt. Dabei wird bevorzugt auf dem Bildschirm ein Abbild der Umgebung des Fahrzeugs dargestellt, welches über geeignete Sensoren ermittelt wurde. Des Weiteren wird bevorzugt eine Abbildung des eigenen Fahrzeugs auf dem Touchscreen dargestellt, wobei der Fahrer einen Vorzugsbereich auswählt, indem er einen an das Fahrzeug angrenzenden Bereich auf dem Bildschirm markiert oder eine der Türen des Fahrzeugs auf dem Bildschirm auswählt. Alternativ zu der Eingabe über einen Touchscreen ist es beispielsweise denkbar, dem Fahrer auf einem Bildschirm mehrere Auswahlmöglichkeiten anzubieten, aus denen er über Tasten auswählen kann. So können dem Fahrer beispielsweise die Türen des Fahrzeugs als mögliche Auswahlpunkte angeboten werden, aus denen der Fahrer über Pfeiltasten wählt und über eine Bestätigungstaste eine Tür als Vorzugsbereich auswählt.

Bevorzugt steht ein Mobilgerät mit dem Fahrzeug in Verbindung, wobei über das Mobilgerät das Bestimmen des Vorzugsbereiches erfolgt. Auf dem Mobilgerät, beispielsweise ein Smartphone oder Tablet, wird eine entsprechende eingerichtete App ausgeführt oder eine entsprechend eingerichtete Internetseite aufgerufen, mit der der Vorzugsbereich bestimmt werden kann. Das Mobilgerät steht dazu mit dem Fahrzeug in Verbindung, wobei die Verbindung bevorzugt drahtlos ausgestaltet ist, beispielsweise in Form einer Bluetooth- oder WLAN-Verbindung oder über ein Mobilfunknetz beziehungsweise das Internet hergestellt wird. Zum Auswählen des Vorzugsbereichs stellt das Mobilgerät bevorzugt über einen Bildschirm, ähnlich wie mit Bezug zu der Mensch-Maschine-Schnittstelle beschrieben, ein Abbild der Umgebung dar. Auf dem Bildschirm werden der Parkplatz und ein Abbild des Fahrzeugs auf dem Parkplatz dargestellt. Ist das Mobilgerät mit einem Touchscreen ausgerüstet, kann, wie zuvor beschrieben, die Auswahl des Vorzugsbereichs durch Berühren einer Darstellung einer Tür des Fahrzeugs oder durch Auswahl eines an das Fahrzeug angrenzenden Bereichs erfolgen.

Bevorzugt wird über das Mobilgerät nach der Auswahl des Vorzugsbereichs ein automatisches Führen des Fahrzeugs zur optimalen Fahrzeugposition mit optimaler Fahrzeugausrichtung gestartet. Der Fahrer muss dabei nicht im Fahrzeug sitzen, sondern kann sich außerhalb des Fahrzeugs befinden und von außerhalb das Fahrmanöver überwachen.

Bevorzugt wird beim Bestimmen des Vorzugsbereichs dem Fahrer bereits ein Vorzugsbereich vorgeschlagen, wobei der Vorschlag auf der Belegung der Sitze des Fahrzeugs basiert, wobei eine Tür des Fahrzeugs vorausgewählt wird, die einem belegten Sitz zugeordnet ist. Die Belegungen der Sitze des Fahrzeugs werden über entsprechende Sensoren erkannt. Dabei kann zusätzlich vorgesehen sein, dass besondere Belegungen der Sitze, wie beispielsweise mit einem Kindersitz oder einer Babyschale, ebenfalls erkannt werden und bei der Vorauswahl bevorzugt berücksichtigt werden können.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrerassistenzsystems oder eines Subsystems hiervon in einem Fahrzeug handeln oder um eine Applikation für Fahrerassistenzfunktionen, welche beispielsweise auf einem Smartphone oder Tablet ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD, Blu-Ray Disc oder einem USB-Stick. Zusätzlich oder alternativ kann das Computerprogramm auf einer Computereinrichtung, wie etwa auf einem Server, zum Herunterladen bereitgestellt werden, zum Beispiel über ein Datennetzwerk wie das Internet oder eine Kommunikationsverbindung wie über eine Telefonleitung oder eine drahtlose Verbindung.

Erfindungsgemäß wird des Weiteren ein Mobilgerät vorgeschlagen, welches zur Kommunikation mit einem Fahrzeug eingerichtet ist, wobei das Mobilgerät ferner eingerichtet ist, einen Vorzugsbereich zu bestimmen, in dem eine Tür oder ein an das Fahrzeug angrenzender Bereich ausgewählt wird und ein automatisches Führen des Fahrzeugs zu einer optimalen Fahrzeugposition mit optimaler Fahrzeugausrichtung auf einem Parkplatz zu starten, wobei die optimale Fahrzeugposition mit der optimalen Fahrzeugausrichtung derart gewählt ist, dass der Vorzugsbereich frei von den Parkplatz begrenzenden Objekten ist.

Das Mobilgerät ist bevorzugt zur Verwendung mit einem der hierin beschriebenen Verfahren eingerichtet, so dass die im Rahmen des Verfahrens beschriebenen Merkmale entsprechend für das Mobilgerät gelten.

Ein weiterer Aspekt der Erfindung betrifft ein Fahrerassistenzsystem umfassend Sensoren zur Erfassung der Umgebung eines Fahrzeugs und ein Steuergerät. Das Fahrerassistenzsystem ist ferner eingerichtet, einen Vorzugsbereich zu bestimmen und/oder mit einem Mobilgerät zu kommunizieren, wobei das Mobilgerät zum Bestimmen eines Vorzugsbereichs eingerichtet ist. Zudem ist das Fahrerassistenzsystem eingerichtet, eine optimale Fahrzeugposition mit optimaler Fahrzeugausrichtung zu ermitteln, bei der der Vorzugsbereich frei von den Parkplatz begrenzenden Objekten ist, und das Fahrzeug zur optimalen Fahrzeugposition mit der optimalen Fahrzeugausrichtung zu führen.

Bevorzugt ist das Fahrerassistenzsystem zur Durchführung der hierin beschriebenen Verfahren ausgebildet und/oder eingerichtet. Dementsprechend gelten die im Rahmen des Verfahrens beschriebenen Merkmale entsprechend für das Fahrerassistenzsystem und umgekehrt die im Rahmen des Fahrerassistenzsystems beschriebenen Merkmale entsprechend für das Verfahren.

Bevorzugt umfasst das Fahrerassistenzsystem eine Mensch-Maschine-Schnittstelle, beispielsweise ausgeführt als Touchscreen, über die der Vorzugsbereich bestimmt werden kann.

Die Sensoren zur Erfassung der Umgebung des Fahrzeugs sind bevorzugt als Ultraschallsensor, Radarsensor, Lidarsensor, optische Kameras, Stereokameras oder Kombinationen mindestens zweier dieser Sensoren ausgestaltet.

### Vorteile der Erfindung

Parkplätze werden häufig von Objekten, wie beispielsweise andere parkende Fahrzeuge, Mauern oder Hecken begrenzt. Insbesondere bei Querparklücken befinden sich an einer oder an beiden Seiten des Fahrzeugs begrenzende Objekte. Diese begrenzenden Objekte begrenzen den Raum, der für einen Zugang zum Fahrzeug, insbesondere zum Zugang zu den Türen des Fahrzeugs, zur Verfügung steht.

Um möglichst viel Platz beim Ein- und Aussteigen aus dem Fahrzeug zu haben ist es daher vorteilhaft, das Fahrzeug nicht genau in der Mitte des Parkplatzes zu platzieren und häufig ist es des Weiteren vorteilhaft, das Fahrzeug schräg einzuparken, das heißt, dass die Längsachse des Fahrzeugs nicht mit der Längsachse des Parkplatzes übereinstimmt. Auf diese Weise werden Teile des Fahrzeugs dichter an ein oder mehrere begrenzende Objekte herangeführt. Dafür wird der Abstand von anderen Teilen des Fahrzeugs zu begrenzenden Objekten vergrößert. Beispielsweise lässt sich bei einer Querparklücke, die zu beiden Seiten von parkenden Fahrzeugen begrenzt wird, der Abstand der Fahrertür zum nächstgelegenen parkenden Fahrzeug vergrößern, indem das Fahrzeug nicht in der Mitte des Parkplatzes sondern seitlich von der Mitte versetzt abgestellt wird. Auf diese Weise kann auch beispielsweise der Abstand einer der Fondtüren zum benachbarten Fahrzeug vergrößert werden. Da die Fahrzeugtüren in der Regel aufschwingen, kann der zum Ein- und Ausstieg zur Verfügung stehende Raum bzw. Bereich noch weiter vergrößert werden, indem das Fahrzeug schräg auf dem Parkplatz positioniert wird.

Durch das vorgeschlagene Verfahren kann der Bereich des Fahrzeugs, der gut zugänglich sein soll, durch das Bestimmen des Vorzugsbereichs frei vorgegeben werden. So kann beispielsweise beim Transport einer hilfsbedürftigen Person, wie zum Beispiel einer gehbehinderten Person oder eines Kindes, im Fond des Fahrzeugs die entsprechende Tür als Vorzugsbereich markiert werden. Beim Einparken wird dann das Fahrzeug so auf dem Parkplatz positioniert, dass ausreichend Platz zur Verfügung steht, um der hilfsbedürftigen Person beim Ein- oder Ausstieg zu helfen.

In weiteren Ausführungsformen der Erfindung kann die Position des Fahrzeugs auch nachträglich mit Hilfe des erfindungsgemäßen Verfahrens korrigiert werden.

Dies ist beispielsweise dann sinnvoll, wenn erst nach dem Einparken festgestellt wird, dass zum Ein- oder Ausstieg einer hilfsbedürftigen Person nicht ausreichend Raum zur Verfügung steht.

In einer vorteilhaften Weiterbildung des Verfahrens kann das Verfahren durch den Fahrer auch von außerhalb des Fahrzeugs gesteuert werden. Auf diese Weise kann das Fahrzeug im Hinblick auf einen Vorzugsbereich optimal positioniert werden, ohne Rücksicht auf die Fahrertür nehmen zu müssen.

### Kurze Beschreibung der Figuren

Ausführungsbeispiele der Erfindung sind in den Figuren dargestellt und in der nachfolgenden Beschreibung näher erläutert.

Es zeigen
- Figur 1: ein Fahrzeug vor dem Einparken in eine Querparklücke,
- Figur 2a: das Auswählen eines Fahrzeugbereichs mit einem Touchscreen,
- Figur 2b: das Auswählen einer Tür mit einem Touchscreen,
- Figur 3: eine optimale Fahrzeugposition und Fahrzeugausrichtung,
- Figur 4: das Einparken in eine Querparklücke mit optimaler Fahrzeugposition und -ausrichtung,
- Figur 5: ein bereits in einer Querparklücke eingeparktes Fahrzeug
- Figur 6a: das Auswählen eines Bereichs eines Fahrzeugs auf einem Mobilgerät,
- Figur 6b: das Auswählen einer Tür mit Hilfe eines mobilen Geräts,
- Figur 7: die innerhalb eines Parkplatzes bestimmte optimale Fahrzeugposition und Ausrichtung und
- Figur 8: ein Korrigieren der Fahrzeugposition auf einem Parkplatz.

### Ausführungsformen der Erfindung

In der nachfolgenden Beschreibung der Ausführungsbeispiele der Erfindung werden gleiche oder ähnliche Komponenten und Elemente mit gleichen Bezugszeichen bezeichnet, wobei auf eine wiederholte Beschreibung dieser Komponenten oder Elemente in Einzelfällen verzichtet wird. Die Figuren stellen den Gegenstand der Erfindung nur schematisch dar.

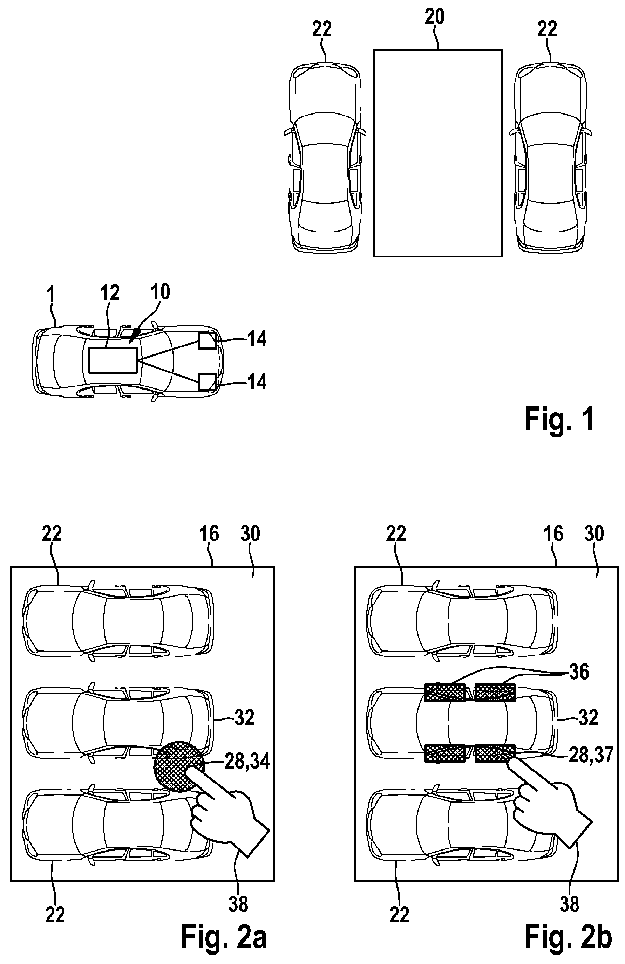

Figur 1 zeigt ein Fahrzeug 1 mit einem erfindungsgemäßen Fahrerassistenzsystem 10. Das Fahrerassistenzsystem 10 umfasst ein Steuergerät 12 mit Sensoren 14. Die Sensoren 14 sind beispielsweise als Ultraschallsensoren ausgeführt und sind zur Erfassung der Umgebung des Fahrzeugs 1 eingerichtet. Mit Hilfe der Sensoren 14 hat das Fahrerassistenzsystem 10 einen Parkplatz 20 erkannt, der von zwei begrenzenden Objekten 22 begrenzt ist. Bei dem Parkplatz 20 handelt es sich hier um eine Querparklücke. Die begrenzenden Objekte 22 sind hier parkende Fahrzeuge.

Das Fahrzeug 1 soll mit Hilfe des erfindungsgemäßen Verfahrens so auf dem Parkplatz 20 eingeparkt werden, dass die linke Fondtür bevorzugt wird, das heißt, dass der zum Öffnen der linken Fondtür benötigte Raum beziehungsweise Bereich frei von den begrenzenden Objekten 22 sein soll. Dazu muss in einem ersten Schritt ein Vorzugsbereich 28, vgl. Figuren 2a und 2b, bestimmt werden.

Figuren 2a und 2b zeigen das Bestimmen eines Vorzugsbereichs 28 mit Hilfe einer Mensch-Maschine-Schnittstelle 16. Die Mensch-Maschine-Schnittstelle 16 ist hier als Touchscreen ausgeführt und weist eine Bildschirmanzeige 30 auf. Auf der Bildschirmanzeige 30 sind die begrenzenden Objekte 22 sowie eine Darstellung des eigenen Fahrzeugs 32 dargestellt. Die Darstellung des eigenen Fahrzeugs 32 ist dabei so ausgestaltet, als wäre das Fahrzeug 1 bereits auf dem Parkplatz 20 abgestellt. In der Figur 2a wird der Vorzugsbereich 28 definiert, indem über eine Fingereingabe 38 ein ausgewählter Bereich 34 definiert wird, der an das dargestellte eigene Fahrzeug 32 angrenzt. Alternativ dazu können, wie in Figur 2b dargestellt, bei der Darstellung des eigenen Fahrzeugs 32 bereits die Türen 36 des Fahrzeugs 1 dargestellt werden, wobei der Vorzugsbereich 28 bestimmt wird, indem eine Tür 36 durch eine Fingereingabe 38 ausgewählt wird. Der Vorzugsbereich 28 ist dann der zum Aufschwingen der ausgewählten Tür 37 erforderliche Bereich beziehungsweise Raum.

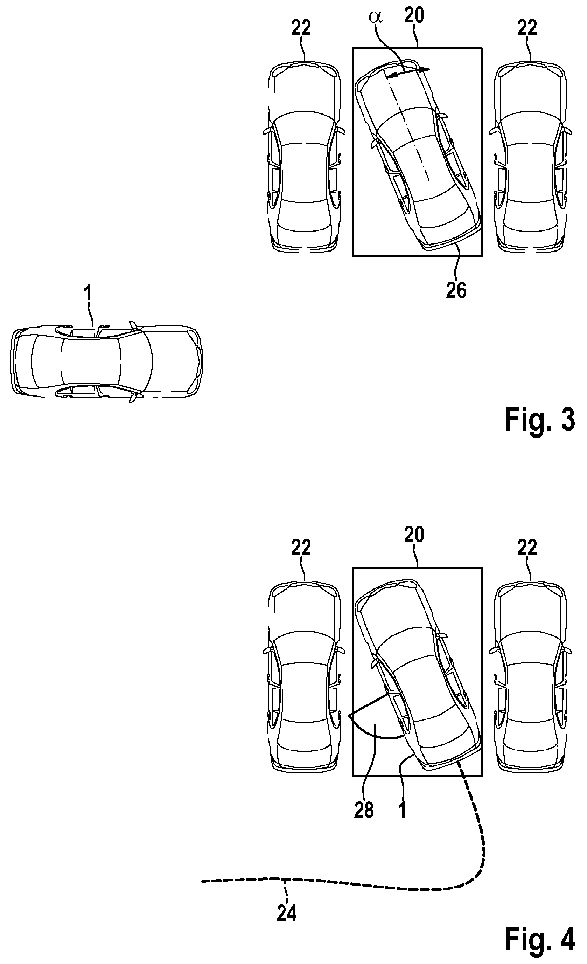

Nach dem Bestimmen des Vorzugsbereichs 28 wird eine optimale Fahrzeugposition 26 mit einer optimalen Fahrzeugausrichtung α bestimmt (vgl. Figur 3).

In Figur 3 ist die gleiche Situation wie in Figur 1 skizziert, jedoch ist an der Stelle des Parkplatzes 20 die optimale Fahrzeugposition 26 sowie die optimale Fahrzeugausrichtung α eingetragen. Die optimale Fahrzeugposition 26 ist dabei auf den geometrischen Mittelpunkt des Fahrzeugs 1 bezogen und die Fahrzeugausrichtung α ist auf den zwischen der Längsachse des Fahrzeugs 1 und der Längsachse des Parkplatzes 20 eingeschlossenen Winkel bezogen. Der in Figur 3 dargestellten Situation liegt die Auswahl der linken Fondtür zugrunde. Da die Türen 36 des Fahrzeugs 1 aufschwingen und die Position des Fahrzeugs 1 beziehungsweise dessen Ausrichtung so gewählt werden sollen, dass der Vorzugsbereich 28 frei von den begrenzenden Objekten 22 ist, wird das Fahrzeug 1 schräg auf dem Parkplatz 20 angeordnet.

Nach Bestimmen der optimalen Fahrzeugposition 26 und der optimalen Fahrzeugausrichtung α wird in einem nächsten Schritt eine Trajektorie 24 bestimmt, mit der das Fahrzeug 1 zu der optimalen Fahrzeugposition 26 mit der optimalen Fahrzeugausrichtung α geführt werden kann. Dies ist in Figur 4 dargestellt.

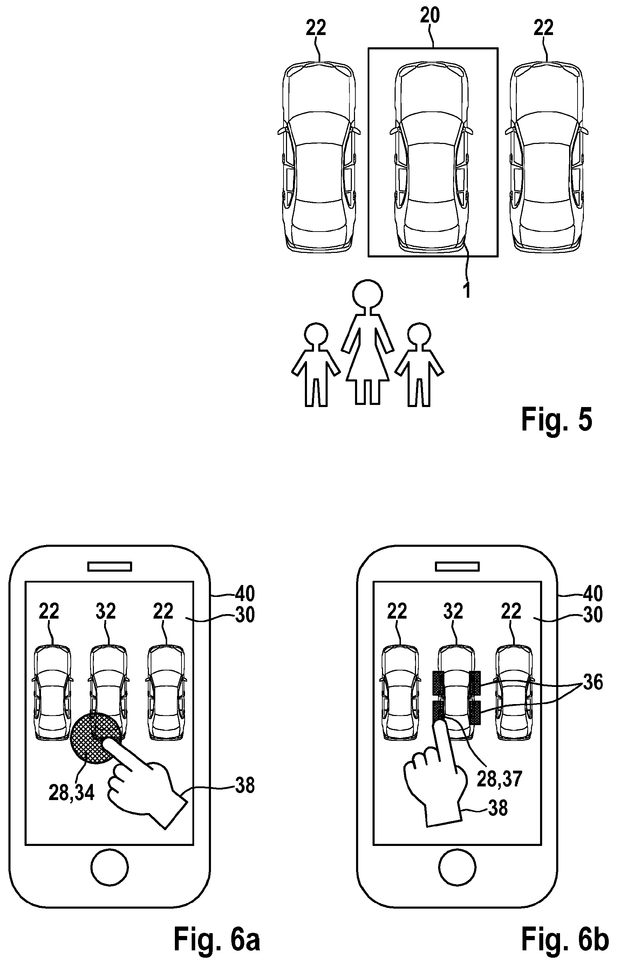

In Figur 5 ist ein bereits parkendes Fahrzeug 1 dargestellt. Das Fahrzeug 1 befindet sich auf einem Parkplatz 20, welcher eine Querparklücke ist, die an beiden Seiten von begrenzenden Objekten 22, hier parkende Fahrzeuge, begrenzt ist. Um beispielsweise einem Kind beim Einstieg zu helfen, soll das Fahrzeug 1 nun mit Hilfe des erfindungsgemäßen Verfahrens innerhalb des Parkplatzes 20 neu angeordnet werden. Dazu wird wieder zunächst ein Vorzugsbereich 28 bestimmt, vgl. Figuren 6a und 6b.

In den Figuren 6a und 6b ist ein Mobilgerät 40 dargestellt, beispielsweise ein Smartphone. Das Mobilgerät 40 weist jeweils eine Bildschirmanzeige 30 auf, auf der die in Figur 5 dargestellte Situation abgebildet ist. Dabei werden die begrenzenden Objekte 22 ebenso dargestellt wie eine Darstellung des eigenen Fahrzeugs 32. Ähnlich wie bereits zu Figur 2a beschrieben wird in Figur 6a ein Vorzugsbereich 28 definiert, in dem über eine Fingereingabe 38 ein ausgewählter Bereich 34 definiert wird, der an das dargestellte eigene Fahrzeug 32 angrenzt. In Figur 6b werden, ähnlich wie bereits mit Bezug zu Figur 2b beschrieben, bei der Darstellung des eigenen Fahrzeugs 32 die Türen 36 des Fahrzeugs 1 dargestellt. Die Auswahl des Vorzugsbereichs 28 erfolgt hierbei durch eine Fingereingabe 38, bei der eine ausgewählte Tür 37 definiert wird.

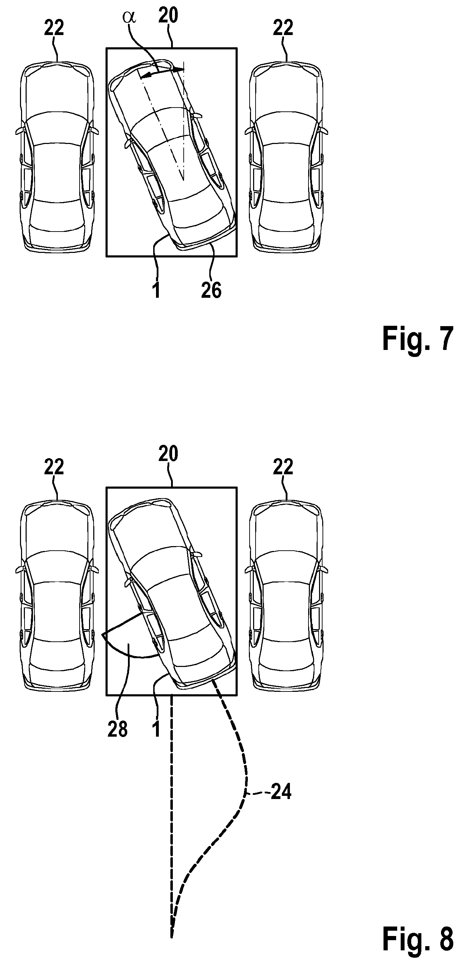

Nach der Auswahl des Vorzugsbereichs 28 wird wieder eine optimale Fahrzeugposition 26 und eine optimale Fahrzeugausrichtung α ermittelt. In der in Figur 7 dargestellten Skizze wird eine Situation dargestellt, der eine Auswahl der linken Fondtür zugrunde liegt. Wie bereits mit Bezug zu Figur 3 beschrieben, wird das Fahrzeug 1 schräg auf dem Parkplatz 20 positioniert, um den Vorzugsbereich 28 von den begrenzenden Objekten 22 frei zu halten.

Nach der Ermittlung der optimalen Fahrzeugposition 26 und der optimalen Fahrzeugausrichtung α kann die Trajektorie 24 bestimmt werden, mit der das Fahrzeug 1 geführt werden kann. Vorteilhafterweise kann das Führen des Fahrzeugs 1 vollautomatisch erfolgen, wobei das Fahrerassistenzsystem 10, vergleiche Figur 1, sowohl die Längsführung als auch die Querführung übernimmt. Das automatische Führen des Fahrzeugs 1 kann über das Mobilgerät 40 gestartet werden.

In Figur 8 ist dargestellt, wie das Fahrmanöver des Fahrzeugs 1 entlang der Trajektorie 24 ausgeführt wird. Das Fahrzeug 1 verlässt dabei entlang der Trajektorie 24 zunächst den Parkplatz 20, um dann schräg wieder auf den Parkplatz 20 zu fahren.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Fahrerassistenz, bei dem ein Fahrer eines Fahrzeugs (1) bei einem Fahrmanöver unterstützt wird, umfassend die Schritte:
a) Bestimmen eines an das Fahrzeug (1) angrenzenden Vorzugsbereichs (28) durch Auswählen eines Bereichs (34) oder einer Tür (37) des Fahrzeugs (1),
b) Ermitteln einer optimalen Fahrzeugposition (26) und einer optimalen Fahrzeugausrichtung (α) auf einem Parkplatz (20), bei der der Vorzugsbereich (28) frei von den Parkplatz (20) begrenzenden Objekten (22) ist,
c) Führen des Fahrzeugs (1) zur optimalen Fahrzeugposition (26) mit optimaler Fahrzeugausrichtung (α).

2. Verfahren nach Anspruch 1, **dadurch gekennzeichnet, dass** über dem Fahrzeug (1) zugeordnete Sensoren (14) Parkplätze (20) in der Umgebung des Fahrzeugs (1) erkannt werden, ein Parkplatz (20) ausgewählt wird, und das Fahrzeug (1) zu der optimalen Fahrzeugposition (26) mit optimaler Fahrzeugausrichtung (α) auf dem ausgewählten Parkplatz (20) geführt wird.

3. Verfahren nach Anspruch 1, **dadurch gekennzeichnet, dass** das Fahrzeug (1) bereits auf dem Parkplatz (20) abgestellt ist, und das Fahrzeug (1) zu der optimalen Fahrzeugposition (26) mit optimaler Fahrzeugausrichtung (α) innerhalb des Parkplatzes (20) geführt wird.

4. Verfahren nach einem der Ansprüche 1 bis 3, **dadurch gekennzeichnet, dass** das Führen des Fahrzeugs (1) zur optimalen Fahrzeugposition (26) mit optimaler Fahrzeugausrichtung (α) automatisch oder semi-automatisch erfolgt.

5. Verfahren nach einem der Ansprüche 1 bis 4, **dadurch gekennzeichnet, dass** ein Mobilgerät (40) mit dem Fahrzeug (1) in Verbindung steht, wobei über das Mobilgerät (40) das Bestimmen des Vorzugsbereichs (28) erfolgt.

6. Verfahren nach Anspruch 5, **dadurch gekennzeichnet, dass** über das Mobilgerät (40) nach der Auswahl des Vorzugsbereichs (28) ein autonomes Führen des Fahrzeugs (1) zur optimalen Fahrzeugposition (26) gestartet wird.

7. Verfahren nach einem der Ansprüche 1 bis 6, **dadurch gekennzeichnet, dass** ein Vorzugsbereich (28) basierend auf der Belegung der Sitze des Fahrzeugs (1) vorgeschlagen wird, wobei eine Tür (37) vorausgewählt wird, die einem Beifahrersitz oder Fondsitz zugeordnet ist.

8. Computerprogramm, das das Verfahren nach einem der Ansprüche 1 bis 7 ausführt, wenn es auf einem Computer abläuft.

9. Mobilgerät (40) welches zur Kommunikation mit einem Fahrzeug (1) eingerichtet ist, **dadurch gekennzeichnet, dass** das Mobilgerät (40) ferner eingerichtet ist,
einen Vorzugsbereich (28) zu bestimmen, indem eine Tür (37) des Fahrzeugs (1) oder ein an das Fahrzeug (1) angrenzender Bereich (34) ausgewählt wird, und
ein automatisches Führen des Fahrzeugs (1) zu einer optimalen Fahrzeugposition (26) mit optimaler Fahrzeugausrichtung (α) auf einem Parkplatz (20) zu starten, wobei der Vorzugsbereich (28) frei von den Parkplatz (20) begrenzenden Objekten (22) ist.

10. Fahrerassistenzsystem (10) umfassend Sensoren (18) zur Erfassung der Umgebung eines Fahrzeugs (1) und ein Steuergerät (12), **dadurch gekennzeichnet, dass**
das Fahrerassistenzsystem (10) eingerichtet ist, einen Vorzugsbereich (28) zu bestimmen und/oder mit einem Mobilgerät (40) zu kommunizieren, wobei das Mobilgerät (40) zum Bestimmen eines Vorzugsbereichs (28) eingerichtet ist, und dass
das Fahrerassistenzsystem (10) ferner eingerichtet ist, eine optimale Fahrzeugposition (26) mit einer optimalen Fahrzeugausrichtung (α) auf einem Parkplatz (20) zu ermitteln, bei der der Vorzugsbereich (28) frei von den Parkplatz (20) begrenzenden Objekten (22) ist, und das Fahrzeug (1) zur optimalen Fahrzeugposition (26) mit der optimalen Fahrzeugausrichtung (α) zu führen.
